# EUROPEAN PATENT SPECIFICATION

(11) **EP 3 163 288 B1**
(45) Date of publication and mention of the grant of the patent: **12.09.2018**
(21) Application number: 16196382.2
(22) Date of filing: 28.10.2016
(51) Int. Cl.: G01N 17/02

(54) **NEW PROBES AND DEVICES FOR CATHODIC PROTECTION INSPECTION OF SUBSEA PIPELINES**
NEUE SONDEN UND VORRICHTUNGEN FÜR KATHODENSCHUTZINSPEKTION VON TIEFSEEROHRLEITUNGEN
NOUVELLES SONDES ET DISPOSITIFS D'INSPECTION DE PROTECTION CATHODIQUE DE CONDUITES SOUS-MARINES

(30) Priority: 29.10.2015 IT UB20154873; 29.10.2015 IT UB20155246
(43) Date of publication of application: 03.05.2017
(73) Proprietor: CESCOR S.r.l., 20134 Milano (IT)
(72) Inventor: BAZZONI, Bruno, 20134 MILANO (MI) (IT); MARCASSOLI, Paolo, 20134 MILANO (IT); COLOMBO, Michele, 20134 MILANO (IT)
(74) Representative: Bianchetti Bracco Minoja S.r.l.

(56) References cited:
- CH-A2- 708 614
- GB-A- 2 124 382
- JP-A- S58 208 654
- US-A- 4 758 324
- US-A1- 2012 205 256

## Description

### Field of the invention

The present invention concerns in general the field of Cathodic Protection (CP) inspection of underwater structures, like pipelines and offshore steel platforms, and in particular it provides a new set of probes which offer improved capabilities and performances for CP inspections in terms of quality and completeness of the recorded measurements and of reliability of the probe system.

Furthermore, in an improved version, the new probe system allows easily measuring the electrical resistivity of the seabed, which measuring is then used to interpret the attenuation of the potential signals in case of inspections of buried pipelines.

### State of the art

Subsea pipelines, used mainly for conveying liquid or gas hydrocarbons, are normally laid and buried on the seabed.

In order to protect the external pipeline surfaces, a combination of an organic coating applied on the external pipe surface and cathodic protection, generally by galvanic anodes, is adopted.

On the contrary, in case of offshore steel platforms, cathodic protection is applied on bare steel, i.e. without providing any coating except on surfaces arranged in correspondence of the splash zone, in the seawater, of the probe for the inspection of cathodic protection.

Periodical inspections during the operative life of a subsea pipeline are planned and executed using probes assembled on submarine vehicles like ROV (Remotely Operated Vehicles) or AUV (Autonomous Underwater Vehicles).

A typical inspection system of cathodic protection includes:
- a multi-electrode probe assembled on the submarine vehicle, and
- a remote reference electrode, positioned close to a support vessel, or fixed to the ROV umbilical cable.

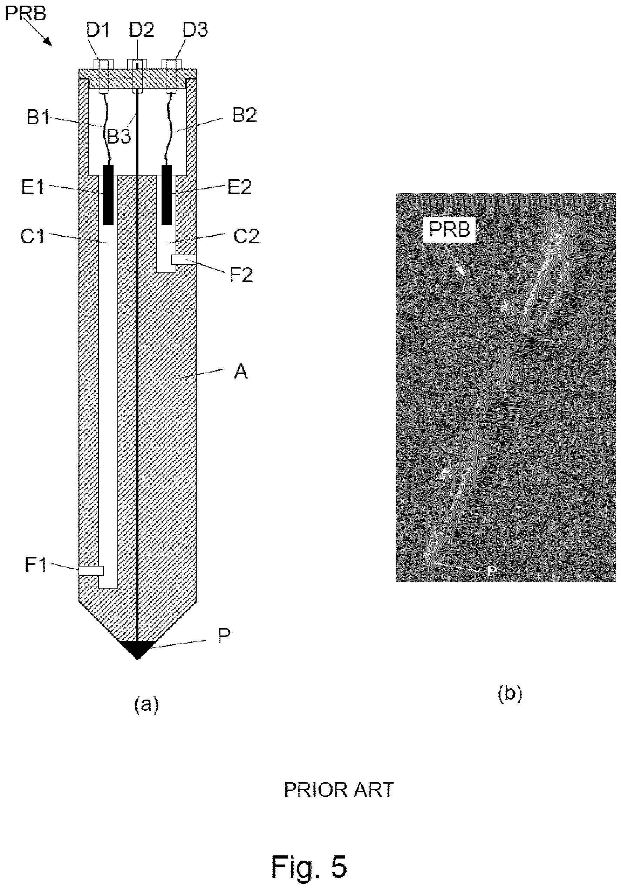

A multi-electrode probe, of a conventional type, assembled on a submarine vehicle is shown in Fig. 5 and indicated with PRB.

The probe PRB, of the conventional type, consists of a body or case A, made of an isolating material, for instance plastic material, which incorporates two identical reference electrodes, E1 and E2, for instance of silver-silver chloride type, which are arranged inside two respective cavities C1 and C2, created within the body A of the probe PRB, acting as capillaries.

During the inspection with a submarine vehicle equipped with the probe PRB, the reference electrodes E1 and E2 of the probe PRB, housed in the cavities C1 and C2, are in contact with the seawater through two separated holes F1 and F2 and are used to record the local ohmic drop, i.e. the potential gradient.

The probe PRB also includes a metallic tip P, fixed to the lower part of the same, through which it is possible to perform contact measurements, that is with the tip P in contact with an element, for instance an anode, by recording the difference of potential between such tip and the closest reference electrode of the probe PRB.

In order to transfer the measured signals, the reference electrodes E1 and E2, and the tip P, are wired by cables B1, B2, B3, as shown in Fig. 5, to subsea connectors D1, D2, D3, located in the upper part of the body A of the probe PRB.

These connectors D1, D2, D3, in their turn, allow the wiring of the probe PRB to the electronic board placed in a pod also assembled on the submarine vehicle.

Typically, the CP inspection survey of a subsea pipeline includes:
- contact potential measurements in the zone of accessible metallic parts or exposed anodes, like for instance flanges or valves, of the buried pipelines;
- potential gradient measurements, performed using the two reference electrodes of the probe, while maintaining the probe in vertical position with respect to the pipeline and as close as possible to the same;
- potential difference measurements between the probe reference electrode located closest to the pipeline, and a remote reference electrode, placed normally at a distance of at least 20-30 m from the pipeline.

Such devices and systems actually used to inspect subsea pipelines often suffer some drawbacks and limitations, including in particular the following ones:
- the sensor or the probe installed on the ROV is quite cumbersome and heavy, since it must both guarantee a minimal distance between the electrodes and moreover contain the contact measuring tip and the cables for the signal transmission, whereby size and weight of the probe can represent an issue for smaller ROV or when several probes, for different inspection purposes, are assembled on the same ROV;
- the probe assembled on the ROV, is subjected to relevant mechanical stresses, in particular during the contact measurements and when marine growth or scales are present on the metallic surfaces which need to be broken by the metallic tip of the probe;
- accordingly, being the material of the case of the probe necessarily non-metallic, the execution of contact measurements, especially when the ROV is of a work-class type, implies a serious risk of mechanical damages of the probe;
- in case of buried pipelines inspections, which are the most frequent ones performed nowadays, the burial depth interposed between the pipeline and the probe makes it hard to acquire precise measurements, since the signals collected in these circumstances are weaker and distorted by an ohmic drop spurious component;
- when inspections are carried out using AUV vehicles, which operate in an autonomous way, there is still a problem, not yet resolved, regarding the positioning of the remote reference electrode, a problem that does not occur when ROV vehicles are used.
GB2124382 A discloses the preamble of claim 1.

US4758324 A discloses a device comprising a plurality of reference electrodes which are fixed in an adjustable manner on a support frame. The device is used for inspecting the corrosion of steel in reinforced concrete structures.

US2012/205256 A1 discloses a device for inspecting the state of cathodic protection of subsea pipelines, comprising a segmented probe with a tip electrode and an additional electrode. JPS58208654 A discloses a probe comprising a metallic tip electrode and an additional electrode. Corrosion potential, soil resistance and corrosion speed are calculated simultaneously.

CH708614 A2 discloses a probe comprising two reference electrodes for determining the corrosion state of a steel structure embedded within an electrolyte. One of the reference electrodes is stationary while the other one can be moved.

### Summary of the invention

The object of the present invention is to improve the reliability of the systems used for CP inspections of subsea pipeline and structures, and to enhance the quality of the inspection results.

This object is attained by the set according to claim 1. Preferred embodiments are defined by the dependent claims.

### Brief description of the figures

These and further scopes, features and benefits of the present invention will appear clearly and precisely from the following description and the attached figures, where:
Fig. 1 is a schematic view of a set, according to an embodiment of the present invention, for the inspection of the cathodic protection status of subsea pipelines, consisting of two separated and distinct parts, i.e. a device or probe comprising two reference electrodes, for executing electric field measurements, and a probe for contact measurements, in the region of the subsea pipelines to be inspected;
Fig. 2 is a schematic view, in section, of a probe, designed and usable for the measurement of sea mud and seawater resistivity, particularly during the inspection of the cathodic protection status of subsea pipelines;
Fig. 3A is a schematic view of an improved assembly or probe, including four reference electrodes for the three-dimensional measurement of the potential and the gradient of the electric field in the region near the pipeline to be inspected;
Fig. 3B is a graphic view and a schematic view of a variant, including three reference electrodes, of the assembly or probe, of Fig. 3A, for the three-dimensional measurement of the potential and the gradient of the electric field in the region near the pipeline to be inspected;
Fig. 4 is a graphic schematic view of a system, to retract a connection cable of a remote electrode to an AUV vehicle during the inspection of the cathodic protection status of subsea pipelines; and
Fig. 5, divided in the sections (a) and (b), is a schematic view, in section, of a conventional multi-electrode probe, for use during the inspection of the cathodic protection status of subsea pipelines, and a 3D model of this conventional multi-electrode probe.

### Description of an embodiment of the invention to inspect subsea pipelines and verify their CP status.

As already remarked, the present invention provides relevant innovations and improvements in the field of the CP inspection of subsea pipelines.

Therefore, in order to appreciate the invention in its entirety, an embodiment and examples will be described in a detailed way below.

In this regard, it is important to point out that the following description of the uses, applications and embodiments of the invention does not preclude different and further uses, applications and embodiments of the same invention not necessarily described here.

It follows also that particular configurations, structures, and features of the present invention, as will be described in the following, can be combined and adapted to different embodiments and applications, while remaining inside the scope of the same invention, as defined by the claims.

### Embodiment of the invention consisting of a set exhibiting a separate configuration defined by two distinct parts respectively a device for electric field measurements and a probe for contact potential measurements.

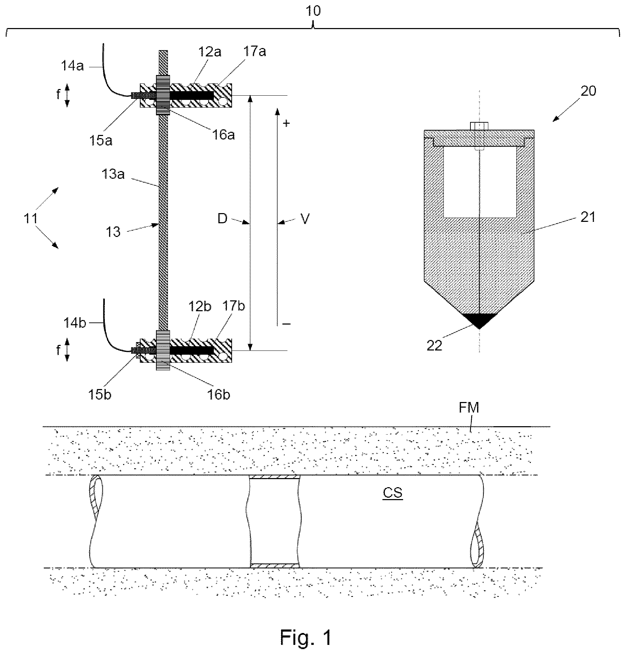

With reference to the drawings and particularly to respective Fig.1, a first embodiment of the invention consists of a set, indicated in its whole with 10, which comprises:
- a device 11, which in turn includes a support frame 13 and two reference electrodes 12a and 12b, supported by the support frame 13, which are provided for measuring a potential difference or electric field gradient, indicated in Fig.1 with V, in the region near a subsea pipeline CS, to be inspected, typically buried in a seabed FM; and
- a probe 20, for the contact measurement in the same area of the pipeline CS under inspection.

According to a very relevant feature of this first embodiment of invention, the set 10 is characterised by a separate and distinct configuration, where the device 11, with its reference electrodes 12a and 12b for the electric field gradient (V) measurement, and the probe 20, for the contact measurement, constitute two different parts that can be installed on ROV and managed separately during the inspection of subsea pipeline CS.

Moreover, according to this first embodiment 10, the two reference electrodes 12a and 12b, included in the device 11, can be adjusted on their support frame 13 of the same device 11, to allow the setting of the distance D between the two electrodes 12a and 12b in the use of the set 10 to inspect the subsea pipeline CS.

For this purpose, as shown in Fig. 1, the support frame 13 of the device 11 can include a threaded rod 13a, with which the electrodes 12a and 12b can be coupled through a threaded cylinder or bush, respectively 16a, 16b, whereby it is possible to adjust the distance D between the electrodes 12a and 12b simply by screwing the corresponding threaded cylinder 16a, 16b on the threaded rod 13a.

Each of the electrodes 12a, 12b is protected by its own case 17a, 17b.

The two electrodes 12a and 12b are connected through respective connectors 15a and 15b to cables 14a and 14b in order to transmit the signals generated by the reference electrodes 12a and 12b to a unique control unit, not shown in the drawings, where the signals are processed to record the V electric field gradient measurement.

The probe 20, for contact measurements, of the set 10, in turn includes a body 21 and a metallic tip 22 for contact measurement, similar to the one included in conventional probes, as the PRB probe shown in Fig.5, and is used for the anodes contact potential measurements.

The probe 20, given the similarity between its tip 22 and the conventional probes tips, exhibits a more compact structure, thereby reducing significantly the risk of damages arising during the execution of the measurements.

In the effective use of the set 10, after adjusting properly the distance D between the reference electrode 12a and 12b, as indicated by arrows f in Fig.1, by screwing in both senses on the threaded rod 13a the threaded cylinders 16a and 16b bearing the two electrodes 12a and 12b, the device 11 is positioned close to the pipeline CS, buried in the seabed FM.

As shown in Fig. 1, the device 11 is positioned in the zone of the subsea pipeline CS buried in the seabed FM in such a way to position the two reference electrodes 12a and 12b along a vertical direction, so as to obtain the gradient value of the electric field V.

Consequently, the two electrodes 12a e 12b of the device 11 generate respective signals that are sent, through the cables 14a e 14b, to the electronic unit where the signals are processed in order to obtain the electric field gradient measurement V along the vertical direction.

The probe 20, separated and distinct from the device 11, in turn is used to perform contact measurements in the proximity of the subsea pipeline CS, through the tip 22 of the same probe 20 in contact with the area where the measurements is taken.

In particular the probe 20 is used both for sea mud resistivity measurement in the seabed and for seawater resistivity measurement in the area of the subsea pipeline CS.

Usefully the set 10, composed by two elements or separate parts, namely the device 11 and the probe 20, can be fixed onto the submarine vehicle without engaging the operator, as it usually happens on the larger ROV vehicles

### Example of a new probe with a tip for seawater and sea mud resistivity measurements in the area of the subsea pipeline to be inspected.

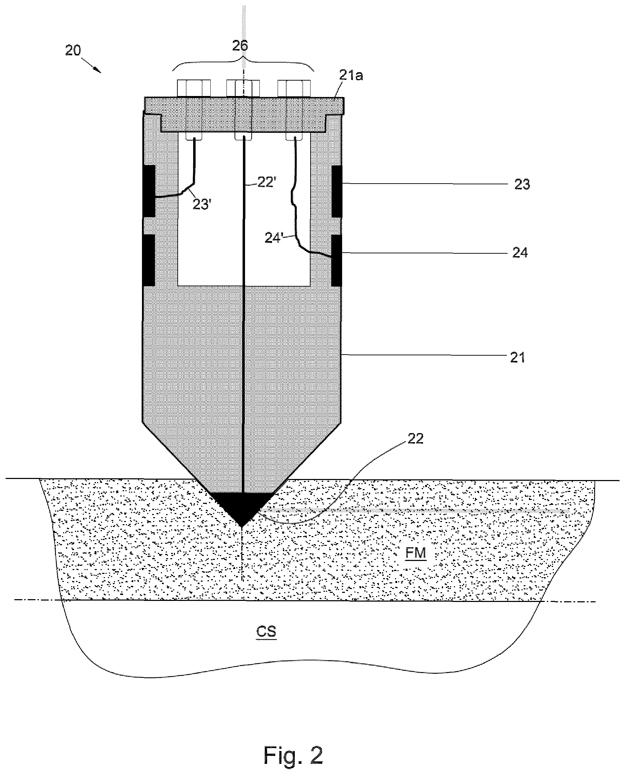

The probe 20, included in the set 10 and usable both for sea mud resistivity measurement in the seabed and for seawater resistivity measurement in the subsea pipeline area, can constitute by itself a relevant example as described in detail in the following with reference to Fig. 2.

As already anticipated while describing the set 10, the probe 20 includes a contact tip for potential measurements, and additional electrodes which allow, together with the metallic tip, to execute sea mud and seawater resistivity measurements.

More in detail the probe 20, conforming to this example, includes:
- a cylindrical body 21;
- a tip 22, fixed to the lower part of the body 21; and
- a first measuring ring 23 and a second measuring ring 24, that are both fixed to and surround the upper part of the cylindrical body 21.

In the probe 20, the two measuring rings 23 and 24 and the tip 22 are connected to respective conductive cables 23', 24' and 22' that are provided for transmitting the signals generated by the same measuring rings 23 and 24 and by the tip 22 to a connecting system indicated with 26 and associated with a plate 21a which covers the upper part of the body 21.

This connecting system 26 in turn allows the connection between the probe 20 and an external electronic unit, not shown in the drawings, suitable to receive and process the signals generated by the measuring rings 23 and 24 and by the tip 22 to obtain the sea mud and seawater resistivity measurements.

In the use of the probe 20, the resistivity measurement is performed by dipping and lowering the probe 20 to the seabed level, so as to rest, as schematized in Fig.2, the tip 22 into contact with the sea mud whose resistivity shall be measured.

Then an alternate current signal is sent between the tip 22, resting on the sea mud, and one of the two rings of the probe 20 (the first ring 23, for instance) that is in contact with seawater.

This first ring 23 has a surface area much greater than that of the tip 22, whereby the measure will depend only on the resistivity of the sea mud that surrounds the tip 22 rather than on the seawater in contact with the first ring 23.

The second ring 24 in turn allows, together with the first ring 23, to measure the resistivity of the seawater.

The tip 22 and the first ring 23, for the measurement of seabed resistivity, and the first ring 23 and the second ring 24, for the measurement of the seawater resistivity, are parts of a cell that is properly calibrated in laboratory to determine the respective cell constants, in particular using the FEM (Finite Element Method) technique.

In a possible simplified version of such probe, not shown in the drawings, the same includes a tip and a unique ring, whereby the seawater resistivity measure is carried out with the probe tip dipped in the seawater but not buried and resting on the seabed.

### Example of a new assembly or probe installable on both ROV and AUV vehicles, for the three-dimensional measurement of the electric field in the area of the subsea pipeline to be inspected.

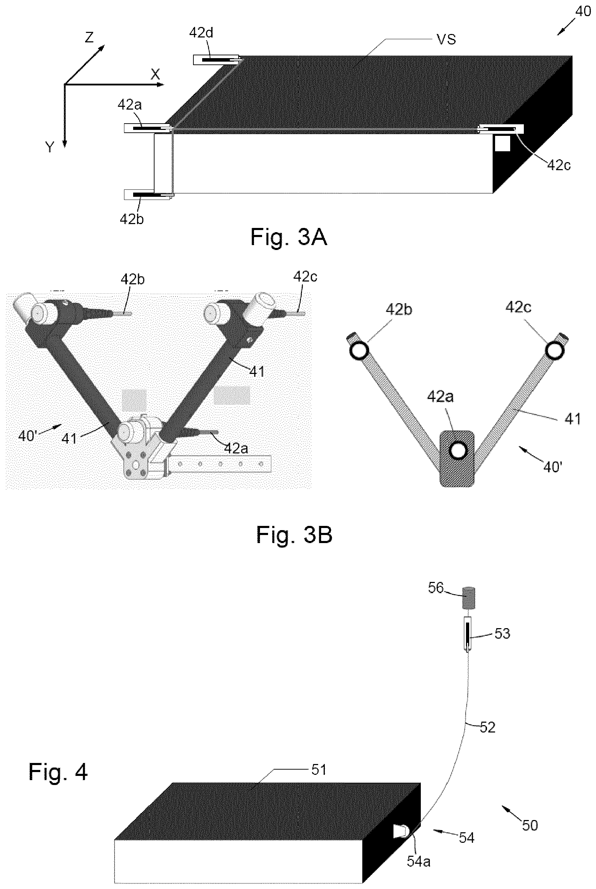

With reference to Fig. 3A, an example, indicated in the whole with 40, consists of an improved assembly or probe which exhibits improved performances with respect to the probe or device with only two electrodes and in particular allows measuring the electric field gradient in its three-dimensional space.

The assembly 40 is usually installed on a submarine vehicle of the type AUV or ROV, indicated with VS, which is used for inspecting the subsea pipelines, wherein this submarine vehicle VS is represented in Fig. 3A in a stylized form as consisting of a body having a parallelepiped shape.

In detail the assembly 40 comprises four references electrodes, respectively 42a, 42b, 42c, 42d, which define:
- a first pair of reference electrodes, indicated with 42a-42b and formed by the electrodes 42a and 42b, which has the function of detecting and measuring the electric field gradient, in the area of the subsea pipeline to be inspected, in the vertical direction Y, as shown in Fig. 3A.
- a second pair of reference electrodes, indicated with 42a-42c and formed by the electrodes 42a and 42c, which has the function of detecting and measuring the electric field gradient in the X direction, i.e. along the direction of the subsea pipeline under inspection; and
- a third pair of reference electrodes, indicated with 42a-42d and formed by the electrodes 42a and 42d, which has the function of detecting and measuring the electric field gradient in the Z direction, i.e. namely in the direction, in the horizontal plane, perpendicular to the direction of the subsea pipeline.

Therefore, while the first pair of reference electrodes 42a-42b is substantially similar and hence operates similarly to the probes, conforming to the prior art, provided with two electrodes, and namely detects the potential gradient only in the vertical direction above the subsea pipeline, the other two pairs of reference electrodes 42a-42c and 42a-42d, which characterize the assembly 40, innovate over the current known systems and probes for the inspection of cathodic protection, and allow the measurement of the potential gradient also in the other two spatial directions.

These three pairs of reference electrodes, respectively 42a-42b, 42a-42c, 42a-42d, may have a common reference electrode, for example the reference electrode 42a, as shown in Fig. 3A.

By summarizing, the multi-electrode assembly or probe 40 is capable of acquiring not only a measure of the gradient of potential between an electrode arranged near the pipeline to be inspected and a remote electrode, spaced from the same pipeline, but also three distinct measures of the potential gradient, in the three spatial directions, so as to allow to accurately describe the electric field in the marine space around the inspected pipeline.

Advantageously, the two reference electrodes of each of the three pairs of reference electrodes, included in the assembly 40 and arranged along the three spatial directions X, Y, Z, can be adjusted relative to one another so as to vary their mutual distance

Fig. 3B shows a variant, indicated with 40', of the example, constituted by an assembly or probe which comprises, like the assembly 40, more than two reference electrodes.

In detail, this assembly or probe 40' includes a support frame 41, having a "V" shape, supporting three reference electrodes 42a, 42b and 42c, with the reference electrodes 42a and 42b being arranged along a first spatial direction and with the reference electrodes 42a and 42c being arranged along a second spatial direction.

In the use of the assembly 40', the respective three electrodes 42a, 42b and 42c are operated as two pairs, respectively 42a-42b and 42a-42c, thereby with the electrode 42a shared by these two pairs 42a-42b and 42a-42c, with each pair of electrodes measuring a respective difference of potential, i.e. the electric field gradient, in close proximity to the subsea pipeline, so as to measure the gradient of the electric field, in the region of the subsea pipeline under inspection, simultaneously in two distinct spatial directions, in particular perpendicular to the axis of the pipeline.

Moreover, the potential gradient in the third dimension, i.e. the direction parallel to the pipeline axis, is obtained by measuring by means of the electrode 42a, in common with the two pairs of electrodes, the difference of potential between two points, along the path of the pipeline, at a prefixed distance each from other.

Therefore the multi-electrode assembly or probe 40' allows, similarly to the assembly 40, to detect and measure not only the difference of potential between an electrode near the pipeline and a remote one, but also several gradients of potential, in the three different spatial directions, so as to describe more precisely the electric field surrounding the inspected subsea pipeline.

Usefully, also the electrodes of each pair included in the assembly 40' can be adjusted in order to vary their mutual distance in the same way as the two electrodes of the device 11 previously described.

Thanks to the embodiment and examples above described, including the set 10, the probe 20 for the execution of resistivity measurements and the assemblies 40 and 40' for the measurements, in a three-dimensional space, of the electric field gradient, it is possible to obtain a lot of useful data during the subsea pipeline inspection.

It is also possible to integrate the potential gradient and electric field measurements, obtained through the set 10 and the assemblies 40 and 40', with seawater and sea mud resistivity measurements obtained through the probe 20, as well as with data regarding the pipeline burial depth, its diameter, and further data and measures.

In particular, the multi-direction potential gradient measurements and the resistivity measurements can be introduced in a finite elements or boundary elements model of the electrical field around the cathodically protected subsea pipeline or submerged structure in general.

This represents a significant improvement in the field of the cathodic protection (CP) inspection of underwater structures, in particular in order to detect position and size of coating defects in the structure under inspection.

### Example of a system to unwind/retract a connecting cable of a remote electrode to an AUV vehicle, in the framework of the inspection of the cathodic protection status of subsea pipelines

With reference to Fig. 4, an example is indicated in its whole with 50 and includes a system able to unwind/retract a connecting cable of a remote electrode to a submarine vehicle.

In detail, the system 50 includes:
- a module 51, built on a submarine vehicle, in particular of the AUV type, for the inspection of subsea pipelines;
- a cable 52 provide for connecting a remote reference electrode 53, distant from the submarine vehicle during the execution of measurements in the subsea pipeline area, to the module 51 installed on the AUV vehicle, in order to allow such module 51 to receive the signals generated by the remote reference electrode 53, during the inspection of the subsea pipeline, and
- a device 54, associated with the module 51, adapted to unwind and to recover the cable 52 respectively from and to the module 51 installed on the AUV vehicle, during the subsea pipeline inspection

For example, the device 54 can include a reel 54a from which it is possible to unwind and on which it is possible to wind the cable 52 respectively at the star and at the end of the inspection.

Furthermore, as schematically shown in Fig. 4, the cable 52 can be associated at an end with a floating element 56, or a similar item, in order to allow a correct positioning of the reference electrode 53 in the remote position distant from the module 51 installed on the submarine vehicle.

What stated above clearly proves that this invention and its embodiments fully achieve the prefixed objects and provide an effective solution to the many problems present in the subsea pipeline inspection sector, making the execution of the inspections, as required in this sector, more practical, easier and more accurate than in the systems in use nowadays, and moreover providing a more detailed overview on the actual status subsea pipelines to be inspected.

It is also evident, given the principle and the concepts here examined, that the embodiment, as above described, can be modified, improved or even varied, without getting off the framework of the invention as defined by the claims.

## Claims

1. Set (10) for inspecting the state of cathodic protection of subsea pipelines, comprising :
- a device (11) with two reference electrodes (12a, 12b) for measuring a potential difference or electric field gradient (V), in particular along a vertical direction, in the space adjacent to a subsea pipeline (CS) to be inspected, and
- a probe (20) having a tip (22) for executing contact potential measurements, that is with the tip of the probe in contact with the area where the measurement is to be taken, in particular of resistivity of the marine mud and of the seawater, in the zone of the subsea pipeline (CS) to be inspected,
wherein said set (10) is **characterized in that** said device (11) and said probe (20) constitute two distinct and separate parts, thereby separately installable and positionable each from the other in the execution of the inspection of the subsea pipeline (CS), and
**in that** said two reference electrodes (12a, 12b) are fixed in an adjustable manner on a support frame (13) of said device (11), so as to allow to adjust the distance (D) therebetween in the use of the set (10) and the respective device (11) to inspect the subsea pipeline (CS), and
**in that** the tip (22) is a metallic tip.

2. Set (10) according to claim 1, wherein the two reference electrodes (12a, 12b) comprised in the device (11) are fixed and coupled in an adjustable manner to said support frame (13, 13a), in order to allow to vary the distance (D) between them, through a respective threaded coupling (16a, 16b).

3. Set (10) according to claim 1 or 2, wherein the two reference electrodes (12a, 12b) comprised in the device (11) are each protected by a respective outer casing (17a, 17b).

4. Set (10) according to any one of the preceding claims, wherein said probe (20) is configured to execute measurements of resistivity and includes:
- a body (21), in particular cylindrical and having an elongated shape, wherein the tip (22) is fixed to a lower part of said body (21); and
- at least one measuring ring (23, 24) which surrounds and is attached to an upper part of said body (21);
wherein said probe (20) is configured to perform a measurement of the resistivity of the marine mud of the seabed (FM) by sending an electrical current signal, in particular in alternate electrical current, between the tip (22) of said probe (20), resting on the seabed (FM), and said at least one measuring ring (23, 24), of the same probe (20), which is immersed in the seawater, and
wherein said at least one measuring ring (23, 24) is dimensioned so as to present a much larger area than that of the tip (22), whereby the measurement made by the probe (20) substantially depends on the resistivity of the marine mud that surrounds the tip (22) and not on the seawater in contact with said at least one measuring ring (23, 24).

5. Set (10) according to claim 4, wherein said probe (20) comprises at least a first measuring ring (23) and a second measuring ring (24) which surround and are fixed to the upper part of the cylindrical body (21), and
wherein said probe (20) is configured to measure the resistivity of the seawater by using said second measuring ring (24) together with said first measuring ring (23).

## Patentansprüche

1. Set (10) zur Überprüfung des Zustands eines Kathodenschutzes von Unterwasserpipelines, umfassend:
- eine Vorrichtung (11) mit zwei Referenzelektroden (12a, 12b) zum Messen einer Potenzialdifferenz oder eines elektrischen Feldgradienten (V), insbesondere entlang einer vertikalen Richtung, in dem zu einer zu überprüfenden Unterwasserpipeline (CS) benachbarten Raum, und
- einen Prüfkopf (20) mit einer Spitze (22) zum Ausführen von Kontaktpotenzialmessungen, d.h. mit der Spitze des Prüfkopfs in Kontakt mit dem Bereich, wo die Messung durchzuführen ist, insbesondere von einem spezifischen Widerstand von dem Seeschlick und von dem Meerwasser, in dem Bereich von der zu überprüfenden Unterwasserpipeline (CS),
wobei das Set (10) **dadurch gekennzeichnet ist, dass** die Vorrichtung (11) und der Prüfkopf (20) zwei eigene und getrennte Teile bilden, wodurch sie bei der Ausführung der Überprüfung der Unterwasserpipeline (CS) voneinander getrennt installierbar und positionierbar sind, und
dass die zwei Referenzelektroden (12a, 12b) in einer einstellbaren Art und Weise an einem Halterahmen (13) der Vorrichtung (11) befestigt sind, um zu ermöglichen, den Abstand (D) dazwischen bei der Verwendung des Sets (10) und der entsprechenden Vorrichtung (11) einzustellen, um die Unterwasserpipeline (CS) zu überprüfen, und
dass die Spitze (22) eine Metallspitze ist.

2. Set (10) nach Anspruch 1, wobei die zwei Referenzelektroden (12a, 12b), welche in der Vorrichtung (11) enthalten sind, in einer einstellbaren Art und Weise an dem Halterahmen (13, 13a) mittels einer entsprechenden Kopplung (16a, 16b) mit Gewinde befestigt und gekoppelt sind, um zu ermöglichen, den Abstand (D) zwischen ihnen zu verändern.

3. Set (10) nach Anspruch 1 oder 2, wobei die zwei Referenzelektroden (12a, 12b), welche in der Vorrichtung (11) enthalten sind, jeweils durch ein entsprechendes äußeres Gehäuse (17a, 17b) geschützt sind.

4. Set (10) nach einem der vorhergehenden Ansprüche, wobei der Prüfkopf (20) ausgestaltet ist, Messungen des spezifischen Widerstandes auszuführen, und aufweist:
- einen Körper (21), insbesondere zylindrisch und mit einer länglichen Form, wobei die Spitze (22) an einem unteren Teil des Körpers (21) befestigt ist; und
- mindestens einen Messring (23, 24), welcher einen oberen Teil des Körpers (21) umgibt und daran angebracht ist;
wobei der Prüfkopf (20) ausgestaltet ist, eine Messung des spezifischen Widerstandes des Seeschlicks von dem Meeresboden (FM) durch Senden eines elektrischen Stromsignals, insbesondere eines elektrischen Wechselstroms, zwischen der Spitze (22) des Prüfkopfs (20), welcher auf dem Meeresboden (FM) ruht, und dem mindestens einen Messring (23, 24) von dem selben Prüfkopf (20), welcher in dem Meerwasser untergetaucht ist, auszuführen, und
wobei der mindestens eine Messring (23, 24) dimensioniert ist, um einen viel größeren Bereich als den von der Spitze (22) darzustellen,
wobei die von dem Prüfkopf (20) durchgeführte Messung im Wesentlichen von dem spezifischen Widerstand des Seeschlicks abhängt, welcher die Spitze (22) umgibt, und nicht von dem Meerwasser in Kontakt mit dem mindestens einen Messring (23, 24) .

5. Set (10) nach Anspruch 4, wobei der Prüfkopf (20) mindestens einen ersten Messring (23) und einen zweiten Messring (24) umfasst, welche den oberen Teil des zylindrischen Körpers (21) umgeben und daran angebracht sind, und
wobei der Prüfkopf (20) ausgestaltet ist, den spezifischen Widerstand des Seewassers durch Verwenden des zweiten Messrings (24) zusammen mit dem ersten Messring (23) zu messen.

## Revendications

1. Ensemble (10) pour inspecter l'état de protection cathodique de conduites sous-marines, comprenant :
- un dispositif (11) avec deux électrodes de référence (12a, 12b) pour mesurer une différence de potentiel ou un gradient de champ électrique (V), en particulier le long d'un sens vertical, dans l'espace adjacent à une conduite sous-marine (CS) devant être inspectée, et
- une sonde (20) ayant une pointe (22) pour exécuter des mesures de potentiel par contact, à savoir avec la pointe de la sonde en contact avec la zone où la mesure doit être prise, en particulier de résistivité des boues marines et de l'eau de mer, dans la zone de la conduite sous-marine (CS) devant être inspectée,
dans lequel ledit ensemble (10) est **caractérisé en ce que** ledit dispositif (11) et ladite sonde (20) constituent deux parties distinctes et séparées, ainsi installables et positionnables séparément l'un de l'autre dans l'exécution de l'inspection de la conduite sous-marine (CS), et
**en ce que** lesdites deux électrodes de référence (12a, 12b) sont fixées d'une manière ajustable sur un châssis support (13) dudit dispositif (11), de façon à permettre l'ajustement de la distance (D) entre celles-ci lors de l'utilisation de l'ensemble (10) et du dispositif (11) respectif pour inspecter la conduite sous-marine (CS), et
**en ce que** ladite pointe (22) est une pointe métallique.

2. Ensemble (10) selon la revendication 1, dans lequel les deux électrodes de référence (12a, 12b) comprises dans le dispositif (11) sont fixées et couplées d'une manière ajustable audit châssis support (13, 13a), afin de permettre de faire varier la distance (D) entre elles, par l'intermédiaire d'un accouplement fileté (16a, 16b) respectif.

3. Ensemble (10) selon la revendication 1 ou 2, dans lequel les deux électrodes de référence (12a, 12b) comprises dans le dispositif (11) sont chacune protégées par un boîtier extérieur (17a, 17b) respectif.

4. Ensemble (10) selon l'une quelconque des revendications précédentes, dans lequel ladite sonde (20) est configurée pour exécuter des mesures de résistivité et inclut :
- un corps (21) en particulier cylindrique et ayant une forme allongée, dans lequel la pointe (22) est fixée à une partie inférieure dudit corps (21) ; et
- au moins un anneau de mesure (23, 24) qui entoure et est fixé à une partie supérieure dudit corps (21) ;
dans lequel ladite sonde (20) est configurée pour exécuter une mesure de la résistivité des boues marines du fond marin (FM) en envoyant un signal de courant électrique, en particulier un courant électrique alternatif, entre la pointe (22) de ladite sonde (20), reposant sur le fond marin (FM), et ledit au moins un anneau de mesure (23, 24), de la même sonde (20), qui est immergé dans l'eau de mer, et
dans lequel ledit au moins un anneau de mesure (23, 24) est dimensionné de manière à présenter une superficie beaucoup plus grande que celle de la pointe (22), d'où il résulte que la mesure effectuée par la sonde (20) dépend sensiblement de la résistivité des boues marines qui entourent la pointe (22) et non de l'eau de mer en contact avec ledit au moins un anneau de mesure (23, 24).

5. Ensemble (10) selon la revendication 4, dans lequel ladite sonde (20) comprend au moins un premier anneau de mesure (23) et un deuxième anneau de mesure (24) qui entourent et sont fixés à la partie supérieure du corps (21) cylindrique, et
dans lequel ladite sonde (20) est configurée pour mesurer la résistivité de l'eau de mer en utilisant ledit deuxième anneau de mesure (24) ensemble avec ledit premier anneau de mesure (23).
